# EUROPÄISCHE PATENTSCHRIFT

(11) **EP 1 018 497 B1**
(45) Veröffentlichungstag und Bekanntmachung des Hinweises auf die Patenterteilung: **23.04.2003**
(21) Anmeldenummer: 99103174.1
(22) Anmeldetag: 18.02.1999
(51) Int. Cl.: C04B 40/00, C04B 28/10, C01F 11/02

(54) **Verfahren zur Herstellung von fliess-, streich- und spachtelfähigen Kalkmassen**
Method for producing free flowing lime-based materials for coating
Procédé pour la préparation de masses de revêtement à base de chaux à écoulement libre

(30) Priorität: 07.01.1999 DE 19900332
(43) Veröffentlichungstag der Anmeldung: 12.07.2000
(73) Patentinhaber: Strotmann, Rochus, 50935 Köln (DE)
(72) Erfinder: Strotmann, Rochus, 50935 Köln (DE)
(74) Vertreter: Junius, Walther, Dr.

(56) Entgegenhaltungen:
- EP-A- 0 467 165
- AT-B- 214 340
- DE-A- 19 605 701

## Beschreibung

Die Erfindung betrifft ein Verfahren zur Herstellung von fließ-, streich- und spachtelfähigen Kalkmassen für die Injektion in Hohlräume sowie für die Beschichtung von Bauwerken und Skulpturen, bei dem man eine Mischung von gelöschtem Kalk oder Sumpfkalk mit Wasser und Füllstoffen unter Zusatz von Additiven herstellt.

Fließ-, streich- und spachtelfähige Kalkmassen finden seit Jahrhunderten im Hausbau Verwendung. Hierzu wurde Kalkstein zunächst gebrannt und dann in Gruben oder Pfannen gelöst. Dieser Kalk könnte dann nach langen Reifezeiten mit Zuschlagstoffen, meist Sand, zu Mörtel verarbeitet werden.

Eine Möglichkeit der industriellen Herstellung von feuchten Mauer- und Putzmörteln, angewandt in der gesamten Mörtelindustrie, ist aus der AT 214 340 (Svatos) bekannt geworden. Dieses Verfahren vermeidet das zuvor notwendige Reifen des Kalkhydrats in Sumpfgruben und ermöglicht die sofortige Mischung des aktivierten wässrigen Kalkhydratbreies mit dem Füllstoff Sand sowie die sofortige Verarbeitung des in dieser Weise hergestellten Mörtels zum Mauern und Putzen. Der langdauernde Sumpfvorgang des Kalkhydrates konnte in dieser Weise ebenso wie die Verarbeitung von trockenem Kalkhydratpulver umgangen werden. Allerdings muß der aktivierte wässrige Kalkhydratbrei mit dem Füllstoff Sand innerhalb einer Stunde vermischt worden sein oder die Aktivierung durch Rühren muß wiederholt werden.

Ebenso findet Kalkhydrat bei der Herstellung und Beschichtung von Skulpturen Verwendung. Durch Zusätze von Zuschlagstoffen ebenso wie von Härtungsmitteln hat man die Kalkmassen dem Verwendungszweck angepaßt. Als Zuschlagstoffe verwendet man seit eh und je Sand und ähnliche Stoffe, Härtungsmittel reichen von Quark bis zu modernen Kunststoffen. Allerdings hat die Verwendung von Kalkmassen mit zunehmender Verwendung von Zement nach dessen Entdeckung immer mehr in der Bauwirtschaft abgenommen. Eine ähnliche Entwicklung war auch bei der Restaurierung alter Bauwerke und Skulpturen zu verzeichnen. Die uralte Verwendung von Kalkmassen in der Anstrichtechnik ist zuerst durch Anstrichmittel auf der Basis von pflanzlichen und mineralischen Ölen, später durch die Entwicklung von Kunststoffen als Grundstoffen für Anstrichmittel nahezu völlig verdrängt worden. Auch ist die Verwendung von Kalkmassen als Füllmassen durch modernere Massen auf Zement- und/oder Kunststoffbasis ersetzt worden. Dadurch konnte insbesondere der in Schwindungserscheinungen und Rißbildungen bestehende Nachteil der Kalkmassen eliminiert werden, aber auch die sehr langen Abbindezeiten des Kalkes, in denen Feuchtigkeit aus dem mit Kalk erstellten Werk austritt.

Doch haben die modernen Massen ebenfalls ihre Nachteile: Auf Zementbasis hergestellte Massen eignen sich als Anstrichmittel nicht oder nur in sehr beschränktem Maße. Durch ihre sehr große Härte eignen sich Zementmassen für eine Reihe von Anwendungsfällen nicht oder sind Kalkmassen unterlegen. Auch bei Zementmassen können Schwindungsrisse entstehen, die sich im Außenbereich mit Wasser füllen und dann bei Frosteinwirkung die Oberfläche des Werkes sprengen. Zementmassen können auch weitgehend wasserundurchlässig sein und dort, wo Wasseraustritt bei einem Werk notwendig ist, diesen verhindern und damit Schaden am Werk anrichten.

Die sehr große Vielfalt von Kunststoffmassen, von denen jede besondere Eigenschaften hat, macht die Auswahl der geigneten Kunststoffmasse schwierig. Eine für den Anwendungszweck erforderliche kapillare Wassertransportoder Wasserdampfdurchlässigkeit läßt sich bei Kunststoffmassen oft nicht erreichen. Die Verwendung von Kunststoffmassen ist darüber hinaus auch mit Umweltgefährdungen verbunden.

Dabei haben Kalkmassen durchaus auch ihre nicht ohne weiteres ersetzbaren Vorteile, die in der Geschmeidigkeit, Weichheit und einer gewissen Plastizität dieses anorganischen Stoffes liegen.

In der Technik der Restaurierung alter Bauwerke, insbesondere aber alter Skulpturen und auch alter Bildwerke, ist die Verwendung von Massen auf Zement- und Kunststoffbasis besonders problematisch, denn das sind Werkstoffe, die beim zu restaurierenden Werk nicht verwandt wurden, weil sie bei der Schaffung des Werkes noch nicht erfunden waren. Hier sind Kalkmassen gefragt, die bei der Schaffung des Werkes auch verwandt worden waren.

Einen erheblichen technischen Fortschritt in der Restaurierung von Bauwerken und Skulpturen, aber auch in der witterungsbeständigen Beschichtung neuer Werke erbrachte ein in der DE 196 05 701 A1 beschriebenes Verfahren, bei dem nahezu reine Kalkmassen mit seit Alters her verwendeten Zuschlagstoffen Verwendung finden. Bei diesem Verfahren geht man so vor, daß man für die Herstellung einer langzeitig lagerfähigen Masse für die Injektion in Hohlräume sowie für die Beschichtung von Bauwerken und Skulpturen der Mischung ein natriumionenhaltiges Mittel in Form von verdünntem Natriumhydroxid oder Fließmittel, die in der Beton- oder Keramikindustrie als Fließmittel Verwendung finden, zusetzt, und dann diese Mischung mechanisch bei Scherleistungen von 5 - 15 m/sec so dispergiert, daß der Doughnut-Effekt erreicht und länger als 3 Minuten eingehalten wird. Nachteil dieses Verfahrens ist ein relativ hoher Verschleiß der Dispergierscheiben durch den Füllstoffanteil, vor allem aber, daß die Füllstoffe bereits in der Fabrik in die Masse eingearbeitet werden. Das zieht im Handel wegen der Vielzahl der möglichen Füllstoffe das Erfordernis einer sehr umfangreichen Lagerhaltung nach sich und gibt dem Restaurateur oder Handwerker doch nicht die Möglichkeit, genau die erforderlichen Füllstoffmischungen zur Verfügung zu haben, wenn es ihm nicht gelingt, diese sich durch Vermischen mehrerer Produkte zu bereiten.

Die Erfindung vermeidet die Nachteile des Standes der Technik. Es ist die Aufgabe der Erfindung, mit einfachen Mitteln die Nachteile der beschriebenen Verfahren des Standes der Technik zu vermeiden und deren Vorteile in sich zu vereinigen und auf diese Weise dem Restaurator oder einem Handwerker eine Möglichkeit zu geben, sich aus einem Grundstoff unter Zusatz der von ihm für seine Arbeit benötigten Füllstoffe sein Material selbst zusammenzustellen und zu fertigen.

Die Erfindung besteht darin, daß man die Herstellung in zwei Stufen vornimmt, einer ersten Stufe, in der man ein unter Luftabschluß langzeitig lagerfähiges Produkt dadurch erhält, daß man von Kalkhydrat mit einem Feststoffgehalt von mehr als 50% und einem Wassergehalt von weniger als 50% ausgeht, diesem Kalkhydratbrei ein alkalibeständiges Fließmittel und ein alkalibeständiges Schutzkolloid zusetzt und dann diese Mischung mechanisch bei Scherleistungen von 5 - 15 m/sec so dispergiert, daß der Doughnut-Effekt erreicht und länger als 3 Minuten eingehalten wird, und einer zweiten Stufe, in der man das abgelagerte Produkt der ersten Stufe mit feucht gemachten Füllstoffen oder einem Füllstoff-Wasser-Gemisch oder mit Wasser und anschließend mit Füllstoff versetzt und dann durch Rühren vermischt, wobei die Drehzahl des Rührers unterhalb der Grenze zu bleiben hat, in der ein Dispergiervorgang des Kalkhydrates eintritt.

Der in der ersten Produktionsstufe hergestellte Grundstoff hält sich bei Luftabschluß über viele Monate in seiner Konsistenz und Verarbeitbarkeit. Er hat einen so hohen Kalziumhydroxidgehalt, wie er bisher für diese Konsistenz nicht erreichbar gewesen ist. Daher sind die Transportkosten niedrig. Der Restaurator oder Handwerker kann bei dieser Konsistenz sich den gewünschten Füllstoff oder das gewünschte Füllstoffgemisch zusammen mit der gewünschten Wassermenge selbst hinzufügen und dieses Gemisch dann selbst entsprechend den Bedürfnissen für die von ihm auszuführende Arbeit mit ihm zur Verfügung stehenden Rühr- oder Mischgeräten anmischen. Er kann auch benötigte Farbpigmente zufügen. Bei geringen Anforderungen an die Lagerhaltung steht ihm somit eine große Vielfalt von selbst herzustellenden Arbeitsmitteln zur Verfügung, die auf nahezu reiner Kalk-Füllstoff-Basis aufgebaut sind und somit bei der Restaurierung historischer Bauten und Sculpturen nicht moderne Bau- und Werkstoffe in den zu restaurierenden Gegenstand einbringen.

Erstaunlicherweise werden mit dem in der ersten Herstellungsstufe hergestellten Vorprodukt ganz unerwartete Eigenschaften erzielt:

Die Zugfestigkeit des als Kleber benutzten Vorproduktes (unter Hinzugabe einer geringen Füllstoffmenge, wie man sie für die Injektionsmasse benutzt) ist etwa zehnmal so hoch wie von unbehandeltem Kalziumhydroxid.
Die Oberflächenhärte des auf eine Skulptur aufgetragenen Vorprodukt-Füllstoff-Gemisches ist mehr als viermal so hoch wie bei der Verwendung von unbehandeltem Kalziumhydroxid.
Die Neigung zur Rißbildung ist erheblich vermindert.
Das erhärtete Vorprodukt-Füllstoff-Gemisch ist kapillaraktiv und hat damit seine Wasser- und Wasserdampfdurchlässigkeit nicht verloren.

Diese Eigenschaften des Produktes sind auch darauf zurückzuführen, daß das Kalziumhydroxid sich nicht wie herkömmlich verarbeitetes Kalziumhydroxid zwischen die Füllstoffteilchen einlagert, sondern bei dem hochfeinen und in diesem Zustand stabilisierten Zerteilungsgrad die Füllstoffteilchen allseitig fast vollständig umgibt, was man unter dem Elektronenmikroskop beobachten kann.

Ohne jeden Nachteil ist es möglich, daß man das Produkt der ersten Stufe vor seiner Verarbeitung in der zweiten Stufe über Wochen oder Monate abgelagert.

Vorteilhaft für die Stärkung der Eigenschaften des mit diesem Verfahren hergestellten Produktes ist es, daß man als Schutzkolloid kurzkettige Zelluloseäther oder Polyacrylate verwendet.

Zweckmäßigerweise verwendet man als Fließmittel Natriumpolyacrylat oder ein anderes Halogenpolyacrylat.

Es hat sich zur Stabilisierung der bei der Herstellung erzielten Konsistenz und zur Erhaltung der Fließfähigkeit während der Lagerzeit als zweckmäßig erwiesen, daß man dem Kalkhydrat in der ersten Stufe zusätzlich ein natriumionenhaltiges Mittel in Form von verdünntem Natriumhydroxid oder ein Mittel zusetzt, das in der Beton- oder Keramikindustrie als Fließmittel Verwendung findet.

Bei der Herstellung des Vorproduktes geht man zweckmäßigerweise so vor, daß man mit Hochleistungsdissolvern unter Benutzung von Dissolverscheiben bei Scherleistungen von etwa 10 m/sec dispergiert und den Doughnut-Effekt 5-45 Minuten einhält.

Der Doughnuteffekt ist ein aus der Lackindustrie bekannter Begriff, der im Katalog 97-98 "DISPERMAT" der VMA Getzmann GmbH S.9 beschrieben ist:
Nach dem Mischen der flüssigen und pulverförmigen Komponenten wird das Mahlgut durch Erhöhung der Drehzahl in eine rollende turbulenzfreie Bewegung versetzt, bis keine stehenden Zonen an der Behälterwand mehr vorhanden sind. Es bildet sich eine Trombe, wobei ein Teil der Dissolverscheibe sichtbar wird. Dieses Fließbild wird auch als "Doughnut-Effekt" bezeichnet.
Das Entstehen der Trombe zeigt dem Anwender des Dissolvers an, daß er einerseits den größtmöglichen mechanischen Leistungseintrag in das Rührgefäß verwirklicht hat, andererseits aber auch, daß das Mahlgut vollständig durchmischt wird, so daß alle Agglomerate in den Bereich der rotierenden Dissolverscheibe gelangen.
Der Doughnut-Effekt bildet sich bei laminarer Strömung des Dispergieransatzes dann aus, wenn das Mahlgut von der rotierenden Zahnscheibe tangential nach außen hin beschleunigt wird, wobei sich der Mahlgutstrom an der Wandung des Dispergiergefäßes teilt. Der untere Teil des Mahlgutes läuft am Boden des Dispergiergefäßes zurück zur Mitte unterhalb der Welle und steigt dann wieder auf, wobei er erneut die Zahnscheibe trifft. Der zweite Teilstrom bildet die von oben sichtbare Trombe aus.

Die Behandlung des Kalziumhydroxids im Dissolver kann man auch als ein Mahlen des einen hohen Feststoffanteil aufweisenden Kalziumhydroxidbreies zu einer feinsten Zerteilung bezeichnen.

Zweckmäßig zur Erzielung der hohen genannten Festigkeitswerte ist es, daß die Füllstoffe keine hydraulisch wirksamen Bestandteile aufweisen, aber hydrophil sind.

Weiterhin ist es vorteilhaft, wenn man als Füllstoffe Quarzsande, Quarzmehle, Perlitte und/oder Bims, Kalksteinmehl oder andere Natursteinmehle oder -körner und/oder synthetisches Kalziumkarbonat verwendet und Hohlglaskugeln.

Vorteilhaft ist es, daß man als Zusatzstoffe Verbindungen mit hohem Wasserrückhaltevermögen zusetzt.

Die zweite Stufe des erfindungsgemäßen Verfahrens führt man zweckmäßigerweise so aus, daß man beim Einrühren der Feststoffe in der zweiten Verarbeitungsstufe Wasser und/oder Zelluloseäther oder Derivate der Acryl- oder Methacrylsäure zusetzt und dabei eine Rührgeschwindigkeit von 5 m/sec nicht überschreitet.

Die Lagerung des Vorproduktes erfolgt in luftdicht abgeschlossenen Behältern. In diesen ändert sich das Vorprodukt auch bei monatelanger Lagerung nicht. Es steht zu erwarten, daß das Vorprodukt auch nach jahrelanger Lagerung sich nicht ändert und nach der Lagerzeit wie ein frisch hergestelltes Vorprodukt zu Anstrich-, Spachtel-, Füll- und Beschichtungsmasse weiterverarbeitet werden kann. Das Volumen der Behälter kann beliebig sein, vorzugsweies werden innen lakierte Blech-oder Kunststoffgebinde mit einem Fassungsvermögen von 5, 10 und 25 kg verwendet.

Die im Folgenden aufgeführten Ausführungsbeispiele dienen zu Erläuterung der Erfindung:
I.: Herstellung des Vorproduktes
   1. In einer industriellen Dispergieranlage werden
      100 kg Kalkhydrat, trocken,
      98,5 Liter Wasser,
      1,1 kg Natriumpolyacrylat als alkalibeständiges Fließmittel und
      0,4 kg Methylcellulose als alkalibeständiges Schutzkolloid,
      zunächst in einem Mischer mischt und dann mechanisch bei Scherleistungen von 5 - 15 m/sec in einem Dissolver so dispergiert, daß der Doughnut-Effekt erreicht und etwa 10-45 Minuten eingehalten wird. Das erhaltene Produkt wird in luftdicht verschließbare übliche Farbenbehälter abgepackt. Es wird zunächst im Fabriklager und anschließend im Handelslager etwa 10 Wochen gelagert.
   2. In einer industriellen Dispergieranlage werden
      100 kg Kalkhydrat, trocken,
      98,5 Liter Wasser,
      1,1 kg Natrium-Polyacrylat als alkalibeständiges Fließmittel und
      0,4 kg Methylcellulose als alkalibeständiges Schutzkolloid, die zuvor in einem Mischer gemischt waren, mechanisch bei Scherleistungen von 15 m/sec so dispergiert, daß der Doughnut-Effekt erreicht und 10 Minuten eingehalten wird. Das erhaltene Produkt wird in luftdicht verschließbare übliche Farbenbehälter abgepackt. Es wird zunächst im Fabriklager und anschließend im Handelslager etwa 20 Wochen gelagert.
11.:Verarbeitung des Vorproduktes
   Restaurierung einer Steinskulptur:
   1. Nach schonender Oberflächenreinigung werden Hohlstellen und Risse mit einer Injektionsmasse gefüllt, die aus
      1000 g dispergiertes Kalkhydrat (Verfahren II.1)
      4.400 g Marmormehl (<0,1 mm)
      1.100 g Wasser
      besteht.
   2. Nach Trocknung der eingebrachten Massen werden die noch sichtbaren (von der Injektionsmasse weißen) Risse, sowie Ausbrüche und Fehlstellen mit einer Steinergänzungsmasse gekittet, die aus
      1 Raumteil dispergiertes Kalkhydrat
      (Verfahren II.1)
      6-8 Raumteile Füllstoffe (3 RT farbiges Gesteinsmehl, 3 RT Quarzsand 0 - 0,5 mm, 2 RT Quarzmehl 0 - 0,04 mm)
      Anmachwasser nach Bedarf
      besteht.
   3. Schadhafte Fugen zwischen einzelnen Skulpturteilen werden nach dem Ausräumen der Fugen mit einem Mörtel, bestehend aus
      1 Raumteil dispergiertes Kalkhydrat
      (Verfahren II.1)
      9 RT Grubensand 0-2 mm
      Anmachwasser nach Bedarf
      neu verfugt.
   4. Abschließend wird die Steinskulptur mit einer Kalkschlämme als Verschleißschicht beschichtet. Diese Kalkschlämme wird mit Pigmenten eingefärbt, um den Steinfarbton zu erreichen. Die Masse besteht aus:
      1000 g dispergiertes Kalkhydrat (Verfahren II.1)
      4.400 g Marmormehl (<0,1 mm)
      1.250 g Wasser.
   Restaurierung von Wandmalereien
   1. Nach schonender Oberflächenreinigung werden Hohlstellen und Risse mit einer Injektionsmasse gefüllt, die aus
      1000 g dispergiertes Kalkhydsrat (Verfahren II.1)
      4.400 g Marmormehl (<0,1 mm)
      50 g Hohlglaskugeln
      1.300 g Wasser
      besteht.
   2. Sandende Putzflächen werden mit verdünntem dispergiertem Kalkhydrat (Verfahren II.1) gefestigt. Dazu werden
      100 g dispergiertes Kalkhydrat (Verfahren II.1)
      100 g Wasser
      gemischt. Die entsprechenden Bereiche werden mit einer Lösung von 50 g Wasser und 50 g Ethanol 98% gut vorgenäßt. Das verdünnte Kalkhydrat kann dann mit Hilfe von Injektionsspritzen auf die Oberfläche aufgebracht oder aber in den mürben Putz injeziert werden.
   3. Nach Trocknung der eingebrachten Massen werden die noch sichtbaren (von der Injektionsmasse, bzw. Festigungssuspension weißen) Risse, sowie Ausbrüche und Fehlstellen im Putz mit einer Ergänzungsmasse gekittet, die aus
      1 Raumteil dispergiertes Kalkhydrat (Verfahren II.1)
      9 - 12 Raumteile Grubensand 0,2 mm oder Quarzsand 0-1 mm
      Anmachwasser nach Bedarf
      besteht.
   4. Fehlstellen im Bereich der Tünchen werden mit einer Spachtelmasse, bestehend aus
      1 Raumteil dispergiertes Kalkhydrat
      (Verfahren II.1)
      4.400 g Marmormehl (<0,1 mm)
      50 g Hohlglaskugeln
      1.300 g Wasser
      gekittet.

## Patentansprüche

1. Verfahren zur Herstellung von fließ-, streich- und spachtelfähigen Kalkmassen für die Injektion in Hohlräume sowie für die Beschichtung von Bauwerken und Skulpturen,
bei dem man eine Mischung von gelöschtem Kalk oder Sumpfkalk mit Wasser und Füllstoffen unter Zusatz von Additiven herstellt,
**dadurch gekennzeichnet,**
**daß** man die Herstellung in zwei Stufen vornimmt, einer ersten Stufe, in der man ein unter Luftabschluß langzeitig lagerfähiges Produkt dadurch erhält, daß man von Kalkhydrat mit einem Feststoffgehalt von mehr als 50% und einem Wassergehalt von weniger als 50% ausgeht, diesem Kalkhydratbrei ein alkalibeständiges Fließmittel und ein alkalibeständiges Schutzkolloid zusetzt
und dann diese Mischung mechanisch bei Scherleistungen von 5 - 15 m/sec so dispergiert, daß der Doughnut-Effekt erreicht und länger als 3 Minuten eingehalten wird,
und einer zweiten Stufe, in der man das abgelagerte Produkt der ersten Stufe mit feuchten bzw. feucht gemachten Füllstoffen oder einem Füllstoff-Wasser-Gemisch oder mit Wasser und anschließend mit Füllstoff versetzt und dann durch Rühren vermischt, wobei die Drehzahl des Rührers unterhalb der Grenze zu bleiben hat, in der ein Dispergier-Vorgang des Kalkhydrates eintritt, < 5 m/s Scherleistung.

2. Verfahren nach Anspruch 1,
**dadurch gekennzeichnet,**
**daß** man das Produkt der ersten Stufe vor seiner Verarbeitung in der zweiten Stufe über Wochen oder Monate abgelagert.

3. Verfahren nach Anspruch 1,
**dadurch gekennzeichnet,**
**daß** man als Schutzkolloid kurzkettige Zelluloseäther oder Polyacrylate verwendet.

4. Verfahren nach Anspruch 1,
**dadurch gekennzeichnet,**
**daß** man als Fließmittel Natriumpolyacrylat oder ein anderes Halogenpolyacrylat oder andere handelsüblichen Fließmittel verwendet.

5. Verfahren nach Anspruch 1,
**dadurch gekennzeichnet,**
**daß** man dem Kalkhydrat in der ersten Stufe zusätzlich ein natriumionenhaltiges Mittel in Form von verdünntem Natriumhydroxid oder ein Mittel zusetzt, das in der Beton- oder Keramikindustrie als Fließmittel Verwendung findet.

6. Verfahren nach Anspruch 1,
**dadurch gekennzeichnet,**
**daß** man mit Hochleistungsdissolvern unter Benutzung von Dissolverscheiben bei Scherleistungen von etwa 10 m/sec dispergiert und den Doughnut-Effekt 5-10 Minuten einhält.

7. Verfahren nach Anspruch 1,
**dadurch gekennzeichnet,**
**daß** die Füllstoffe keine hydraulisch wirksamen Bestandteile aufweisen, aber hydrophil sind.

8. Verfahren nach Anspruch 1,
**dadurch gekennzeichnet,**
**daß** man als Füllstoffe Quarzsande, Quarzmehle, Perlitte und/oder Bims, Kalksteinmehl, Natursteinmehl und/oder synthetisches Kalziumkarbonat oder deren Gemische verwendet.

9. Verfahren nach Anspruch 1,
**dadurch gekennzeichnet,**
**daß** man als Zusatzstoffe Verbindungen mit hohem Wasserrückhaltevermögen zusetzt.

10. Verfahren nach Anspruch 1,
**dadurch gekennzeichnet,**
**daß** man beim Einrühren der Feststoffe in der zweiten Verarbeitungsstufe Wasser und/oder Zelluloseäther oder Derivate der Acryl- oder Methacrylsäure zusetzt und dabei eine Rührgeschwindigkeit von 5 m/sec nicht überschreitet.

## Claims

1. Method for production of free-flowing lime materials applicable by brush and knife for injection into cavities and for coating of buildings and sculptures,
in which a mixture of slaked lime or pit lime with water and fillers is produced with additives,
**characterised in that**
the production is carried out in two stages, a first stage in which a product is obtained which can be stored for a long time with air excluded **in that** starting with hydrated lime with a solids content of more than 50% and a water content of less than 50%, a flow-enhancing agent resistant to alkalis and a protective colloid resistant to alkalis are added to this hydrated lime paste and then this mixture is dispersed mechanically with shear rates of 5 - 15 m/sec so that the doughnut effect is obtained and maintained for longer than 3 minutes, and a second stage in which the stored product from the first stage is mixed with moist or moistened fillers or a filler and water mixture or with water and then filler and then stirred, for which the rotational speed of the stirrer must remain below a shear rate of 5 m/s, the limit at which dispersion of the hydrated lime begins.

2. Method according to claim 1, **characterised in that** the product from the first stage is stored for weeks or months before it is processed in the second stage.

3. Method according to claim 1, **characterised in that** short-chained cellulose ethers or polyacrylates are used as protective colloid.

4. Method according to claim 1, **characterised in that** sodium polyacrylate or another halogen polyacrylate or other proprietary flow-enhancing agents are used as flow-enhancing agent.

5. Method according to claim 1, **characterised in that** an agent containing sodium ions in the form of diluted sodium hydroxide or an agent which is used in the concrete or ceramics industry as a flow-enhancing agent is additionally added to the hydrated lime in the first stage.

6. Method according to claim 1, **characterised in that** dispersion is carried out with high-performance dissolvers using dissolver discs at shear rates of approximately 10 m/sec and the doughnut effect is maintained for 5 - 10 minutes.

7. Method according to claim 1, **characterised in that** the fillers exhibit no hydraulically active components, but are hydrophilic.

8. Method according to claim 1, **characterised in that** siliceous sands, siliceous dusts, perlites and/or pumice, limestone powder, natural stone powder and/or synthetic calcium carbonate or mixtures thereof are used as fillers.

9. Method according to claim 1, **characterised in that** compounds with a high water retention capacity are added as additives.

10. Method according to claim 1, **characterised in that** when the solids are stirred in the second processing stage, water and/or cellulose ethers or derivatives of the acrylic or methacrylic acid are added and in the process a stirring speed of 5 m/sec is not exceeded.

## Revendications

1. Procédé de fabrication de masses à base de chaux dont la consistance peut être fluide, crémeuse ou pâteuse, pour l'injection dans des cavités ainsi que pour le revêtement de constructions et sculptures,
pour lequel on fabrique un mélange de chaux éteinte ou de chaux en pâte avec de l'eau et des charges sous adjonction de substances additives,
**caractérisé en ce qu'**on entreprend la fabrication en deux étapes, une première étape lors de laquelle on obtient un produit qui peut être stocké à long terme sous vide par le fait qu'on part d'une chaux hydratée d'une teneur en solides de plus de 50 % et d'une teneur en eau de moins de 50 %, **en ce qu'**on ajoute à cette pâte de chaux hydratée un fluidifiant alcali-résistant et un colloïde protecteur alcali-résistant
et que ce mélange est ensuite dispersé mécaniquement par des puissances de cisaillement de 5 - 15 m/sec de telle sorte qu'on obtient l'effet "cône d'aspiration" (doughnut) qui est maintenu pendant plus de 3 minutes,
et une deuxième étape, lors de laquelle on mélange au produit stocké de la première phase des charges humides ou rendues humides ou un mélange charges-eau, ou avec de l'eau et ensuite avec des charges, et ensuite on le mélange par agitation, moyennant quoi le nombre de tours de l'agitateur doit rester en dessous de la limite de celle où se fait un procédé de dispersion de la chaux hydratée, < 5 m/s de puissance de cisaillement.

2. Procédé selon la revendication 1, **caractérisé en ce qu'**on stocke le produit de la première étape pendant des semaines ou des mois avant le traitement de la deuxième étape.

3. Procédé selon la revendication 1, **caractérisé en ce qu'**on utilise en tant que colloïde protecteur des éthers de cellulose à chaînes courtes ou des polyacrylates.

4. Procédé selon la revendication 1, **caractérisé en ce qu'**on utilise en tant que fluidifiant le polyacrylate de sodium ou un autre polyacrylate halogéné ou d'autres fluidifiants disponibles dans le commerce.

5. Procédé selon la revendication 1, **caractérisé en ce qu'**on ajoute en plus dans la première étape à la chaux hydratée un agent contenant des ions sodium sous la forme d'hydroxyde de sodium dilué ou un agent qui est utilisé comme fluidifiant dans l'industrie du béton ou de la céramique.

6. Procédé selon la revendication 1, **caractérisé en ce qu'**on disperse par une puissance de cisaillement d'environ 10 m/sec en utilisant des disques du dissolveur avec des dissolvants très performants et l'effet "cône d'aspiration" est maintenu pendant 5-10 minutes.

7. Procédé selon la revendication 1, **caractérisé en ce que** les charges ne présentent aucun composant à effet hydraulique, mais sont hydrophiles.

8. Procédé selon la revendication 1, **caractérisé en ce qu'**on utilise comme charges des sables quartzeux, des farines de quartz, des perlites et/ou de la pierre ponce, de la farine de pierre calcaire, de la farine de pierres naturelles, et/ou du carbonate de calcium synthétique ou les mélanges de ceux-ci.

9. Procédé selon la revendication 1, **caractérisé en ce qu'**on ajoute comme substances additives des composés à haute capacité de rétention d'eau.

10. Procédé selon la revendication 1, **caractérisé en ce que** lors de l'agitation des solides dans la deuxième étape de traitement, on ajoute de l'eau et/ou de l'éther de cellulose ou des dérivés d'acide acrylique ou méthacrylique et que ce faisant, on ne dépasse pas une vitesse d'agitation de 5 m/sec.
